# EUROPEAN PATENT APPLICATION

(11) **EP 2 899 114 A1**
(43) Date of publication of application: **29.07.2015**
(21) Application number: 13839118.0
(22) Date of filing: 19.09.2013
(51) Int. Cl.: B63H 21/21, B63H 21/22, B63H 23/30, F16H 21/28

(54) **MARINE GEAR DEVICE**

(30) Priority: 21.09.2012 JP 2012208347; 21.09.2012 JP 2012208348; 21.09.2012 JP 2012208349
(71) Applicant: Yanmar Co., Ltd., Osaka-shi, Osaka 530-8311 (JP)
(72) Inventor: MORI Hisanori, Amagasaki-shi Hyogo 661-0981 (JP)
(74) Representative: Hoffmann Eitle
(86) International application number: PCT/JP2013/075324
(87) International publication number: WO 2014/046192

(57) **Abstract**

In a marine gear device (21) transmitting a rotary power of a main engine (20) mounted to a marine vessel (1) to a propeller (5), the present invention aims at reducing an operation force required for a manual operation of a forward and reverse travel operation tool (14) which switches and operates a forward and reverse travel switching mechanism (40), and satisfying a fail-safe point. The marine gear device (21) of the present invention is provided with an input shaft (23) to which a rotary power of a main engine (20) is input, the forward and reverse travel switching mechanism (40) which switches the rotary power of the input shaft (23) to a forward travel output, a neutral output or a reverse travel output, an operating part (46 (45)) which switches and actuates the forward and reverse travel switching mechanism (40) to a forward travel state, a neutral state or a reverse travel state on the basis of a rotary motion, and an electric actuator (50 (80)) which rotates the operating part (46 (45)) in correspondence to an operation of the forward and reverse travel operation tool (14). The operating part (46 (45)) is provided with a self-return member (56 (86)) which forcibly rotates the operating part (46 (45)) when any electric power is not supplied to the electric actuator (50 (80)), and returns the forward and reverse travel switching mechanism (40) to the neutral state.

## Description

### Technical Field

The present invention relates to a marine gear device which transmits a rotary power of a main engine mounted to a marine vessel to a propeller.

### Background Art

Conventionally, a marine gear device (a speed reducing and reversing device) for a marine vessel such as a pleasure boat is provided with a forward and reverse travel switching clutch which can switch a rotary power of the engine to a forward travel output and a reverse travel output (refer to Patent Document 1). In the marine vessel with this kind of marine gear device, a shifter of the forward and reverse travel switching clutch is connected to a forward and reverse travel lever provided in a control seat of a ship body by a long wire cable. Further, the forward and reverse travel switching clutch is switched and actuated by transmitting an operation force of the forward and reverse travel lever to the shifter via the wire cable, thereby switching a traveling direction of the ship body to the forward travel and the reverse travel.

### Citation List

### Patent Literature

Patent Document 1: Japanese Unexamined Patent Publication No. 7-17486

### Summary of Invention

### Technical Problem

However, in the prior art, since the manual operation force of the forward and reverse travel lever is transmitted to the shifter via the long wire cable, there has been a problem that a great force is necessary for manually operating the forward and reverse travel lever, an operation resistance (an operational feeling) is heavy and an operation load of a ship operator is great.

In the existing marine gear device employing a clutch switching structure by means of a wire cable, there are extremely a lot of requests of reducing the operation force which is required for the manual operation of the forward and reverse travel lever. As a countermeasure for reducing the manual operation force, there can be thought that the forward and reverse travel switching clutch is switched and actuated, for example, by using an electric actuator. However, since it is not originally assumed that the wire cable is replaced with the electric actuator in the existing marine gear device, it is understood that a lot of man hour is necessary for an embedding work of the electric actuator. Further, in the case that the electric actuator breaks down, for example, due to water immersion, it is impossible to switch and actuate the forward and reverse travel switching clutch, and it is understood that a fail-safe problem exists.

### Solution to Problem

A technical object of the present invention is to provide a marine gear device to which an improvement is applied after making a study of the actual condition as mentioned above.

According to the invention of a first aspect, there is provided a marine gear device transmitting a rotary power of a main engine mounted to a marine vessel to a propeller, comprising:
an input shaft to which the rotary power of the main engine is input;
a forward and reverse travel switching mechanism which switches the rotary power of the input shaft to a forward travel output, a neutral output or a reverse travel output;
an operating part which actuates the forward and reverse travel switching mechanism to a forward travel state, a neutral state or a reverse travel state on the basis of a rotary motion; and
an electric actuator which rotates the operating part in correspondence to an operation of a forward and reverse travel operation tool,
wherein the operating part is provided with a self-return member which forcibly rotates the operating part when any electric power is not supplied to the electric actuator, and returns the forward and reverse travel switching mechanism to the neutral state.

According to the invention of a second aspect, there is provided the marine gear device described in the first aspect, further comprising:
an actuation detecting member which detects an actuation state of the electric actuator; and
a controller which drives the electric actuator in response to the operation of the forward and reverse travel operation tool,
wherein the controller discriminates on the basis of a detection information of the actuation detecting member whether the forward and reverse travel switching mechanism is in the forward travel state, the neutral state or the reverse travel state.

According to the invention of a third aspect, there is provided the marine gear device described in the first aspect or the second aspect, wherein the operating part or the electric actuator is provided with an emergency manual operation tool for manually operating the operating part independently from the electric actuator.

According to the invention of a fourth aspect, there is provided the marine gear device described in the first aspect, wherein the electric actuator is an electric direct acting actuator having a rod body which moves forward and backward in connection with the operation of the forward and reverse travel operation tool, and the electric direct acting actuator and the operating part are connected via a conversion mechanism which converts a forward and backward motion of the rod body into a rotating motion of the operating part.

According to the invention of a fifth aspect, there is provided the marine gear device described in the fourth aspect, wherein a center line in a forward and backward moving direction of the rod body is biased so as not to intersect with a center of rotation of the operating part as seen from a direction along the center of rotation of the operating part.

According to the invention of a sixth aspect, there is provided the marine gear device described in the fourth aspect or the fifth aspect, wherein the conversion mechanism is constructed by loosely fitting to a loosely fitting hole which is formed in any one of the rod body and the operating part, a pivotally supporting pin which is provided in the other.

According to the invention of a seventh aspect, there is provided the marine gear device described in the fourth aspect or the fifth aspect, wherein the electric direct acting actuator is supported to a gear case which accommodates the forward and reverse travel switching mechanism, and an arrangement and posture of the electric direct acting actuator in relation to the gear case is changeable so as not to prevent the forward and backward movement of the rod body.

According to the invention of an eighth aspect, there is provided the marine gear device described in the first aspect, further comprising an output shaft which transmits an output of the forward and reverse travel switching mechanism to the propeller,
wherein the electric actuator is arranged in a gear case itself which accommodates the input shaft, the output shaft and the forward and reverse travel switching mechanism or in the vicinity thereof, and a main body of the electric actuator is positioned above an axial line of the output shaft.

According to the invention of a ninth aspect, there is provided the marine gear device described in the eighth aspect, wherein an upper end of the main body of the electric actuator is set to a height position which is lower than the highest end of the gear case.

### Advantageous Effect of Invention

According to the invention of the first aspect, the marine gear device transmitting the rotary power of the main engine mounted to the marine vessel to the propeller is provided with the input shaft to which the rotary power of the main engine is input, the forward and reverse travel switching mechanism which switches the rotary power of the input shaft to the forward travel output, the neutral output or the reverse travel output, the operating part which actuates the forward and reverse travel switching mechanism to the forward travel state, the neutral state or the reverse travel state on the basis of the rotary motion, and the electric actuator which rotates the operating part in correspondence to the operation of the forward and reverse travel operation tool, the operating part is provided with the self-return member which forcibly rotates the operating part when any electric power is not supplied to the electric actuator, and returns the forward and reverse travel switching mechanism to the neutral state. When the electric actuator breaks down or the power supply is turned off, the forward and reverse travel switching mechanism is not set to the forward travel or the reverse travel state. Therefore, it is possible to do away with the risk that the marine vessel actuates unexpectedly despite the ship operator's intention after restoring from the breakdown. It is preferable for the fail-safe.

According to the invention of the second aspect, the marine gear device is provided with the actuation detecting member which detects the actuation state of the electric actuator, and the controller which drives the electric actuator in response to the operation of the forward and reverse travel operation tool, and the controller discriminates on the basis of the detection information of the actuation detecting member whether the forward and reverse travel switching mechanism is in the forward travel state, the neutral state or the reverse travel state. Therefore, it is possible to accurately comprehend the actuation state of the electric actuator and further the state of the forward and reverse travel switching mechanism on the basis of the detection information of the actuation detecting member. It is possible to secure reliability in relation to the drive control of the electric actuator.

According to the invention of the third aspect, the operating part or the electric actuator is provided with the emergency manual operation tool for manually operating the operating part independently from the electric actuator. Therefore, even in the case that any electric system trouble, for example, the abnormality in the electric actuator is generated, it is possible to execute a limp home operation (a degeneracy operation) traveling forward and reverse the marine vessel in a state in which the electric actuator is not effective, by manually operating the emergency manual operation tool. Accordingly, options for dealing with the emergency circumstances are increased, and it is further preferable in the light of the fail-safe.

According to the invention of the fourth aspect, the electric actuator is the electric direct acting actuator having the rod body which moves forward and backward in connection with the operation of the forward and reverse travel operation tool, and the electric direct acting actuator and the operating part are connected via the conversion mechanism which converts the forward and backward motion of the rod body into the rotating motion of the operating part. Therefore, it is possible to electrically achieve the switch and actuation of the forward and reverse travel switching mechanism without using the conventional long wire cable. It is possible to securely reduce the operation force which is required for the manual operation of the forward and reverse travel operation tool.

Further, as mentioned above, since the electric direct acting actuator and the operating part are connected via the conversion mechanism which converts the forward and backward motion of the rod body into the rotating motion of the operating part, it is possible to easily replace the wire cable with the electric direct acting actuator later even in the existing marine gear device which includes the wire cable.

According to the invention of the fifth aspect, the center line in the forward and backward moving direction of the rod body is biased so as not to intersect with the center of rotation of the operating part as seen from the direction along the center of rotation of the operating part. Therefore, the rod body (the electric direct acting actuator) and the operating part are connected while avoiding a dead center where the rotating force does not work, in the conversion mechanism, and it is possible to secure a smooth motion conversion.

According to the invention of the sixth aspect, the conversion mechanism is constructed by loosely fitting to the loosely fitting hole which is formed in any one of the rod body and the operating part, the pivotally supporting pin which is provided in the other. Therefore, it is possible to smoothly convert the forward and backward movement of the rod body into the rotary motion of the operating part without generating any complication in the connection between the rod body and the operating part. It is possible to achieve the smooth motion conversion, and further the secure switch and actuation of the forward and reverse travel switching mechanism, in spite of the simple structure constructed by the combination of the loosely fitting hole and the pivotally supporting pin.

According to the invention of the seventh aspect, the electric direct acting actuator is supported to the gear case which accommodates the forward and reverse travel switching mechanism, and the arrangement and posture of the electric direct acting actuator in relation to the gear case is changeable so as not to prevent the forward and backward movement of the rod body. Therefore, it is possible to achieve the smooth motion conversion and further the secure switch and actuation of the forward and reverse travel switching mechanism in spite of the simple structure in this case, in the same manner as the third aspect.

According to the invention of the eighth aspect, the marine gear device is provided with the output shaft which transmits the output of the forward and reverse travel switching mechanism to the propeller, and the electric actuator is arranged in the gear case itself which accommodates the input shaft, the output shaft and the forward and reverse travel switching mechanism or in the vicinity thereof, and the main body of the electric actuator is positioned above the axial line of the output shaft. Therefore, the electric actuator is positioned at the gear case itself or at the comparatively high position in the vicinity of the gear case. Accordingly, it is possible to reduce the risk that the electric actuator breaks down due to the water immersion. The maintenance work of the electric actuator such as an inspection and a repair and replacement can be easily carried out, and it is possible to reduce the load of the maintenance work.

According to the invention of the ninth aspect, the upper end of the main body of the electric actuator is set to the height position which is lower than the highest end of the gear case. Therefore, it is possible to arrange the electric actuator without increasing a vertical height of the gear case while securing the maintenance workability of the electric actuator. Accordingly, it is possible to achieve compactness of the vertical height of the marine gear device.

### Brief Description of Drawings

Fig. 1 is a schematic side elevational view of a yacht which is provided with a marine gear device according to a first embodiment;
Fig. 2 is a side elevational view of the marine gear device;
Fig. 3 is a partly cut plan view describing a detailed structure of a conversion mechanism;
Fig. 4 is a side elevational cross-sectional view of the marine gear device;
Fig. 5 is a perspective view describing an arrangement relationship of a gear train within the marine gear device;
Fig. 6 is a side elevational view showing a first modified example of the marine gear device;
Fig. 7 is a partly cut plan view describing a detailed structure of a conversion mechanism in the first modified example;
Fig. 8 is a side elevational view showing a second modified example of the marine gear device;
Fig. 9 is a side elevational view showing a third modified example of the marine gear device;
Fig. 10 is a side elevational view showing a fourth modified example of the marine gear device;
Fig. 11 is a side elevational view showing a fifth modified example of the marine gear device;
Fig. 12 is a function block diagram of a controller in the first embodiment;
Fig. 13 is a side elevational view of a marine gear device according to a second embodiment;
Fig. 14(a) is a schematic side elevational view describing a switching structure of a forward and reverse travel switching clutch;
Fig. 14(b) is a schematic plan view describing an attaching structure of a neutral spring;
Fig. 15 is a side elevational view showing a first modified example of the marine gear device;
Fig. 16 is a schematic side elevational view describing a switching structure of a forward and reverse travel switching clutch;
Fig. 17 is a side elevational view showing a second modified example of the marine gear device;
Fig. 18 is a side elevational view showing a sixth modified example of the marine gear device according to the first embodiment; and
Fig. 19 is a side elevational view showing a seventh modified example of the marine gear device according to the first embodiment.

### Description of Embodiments

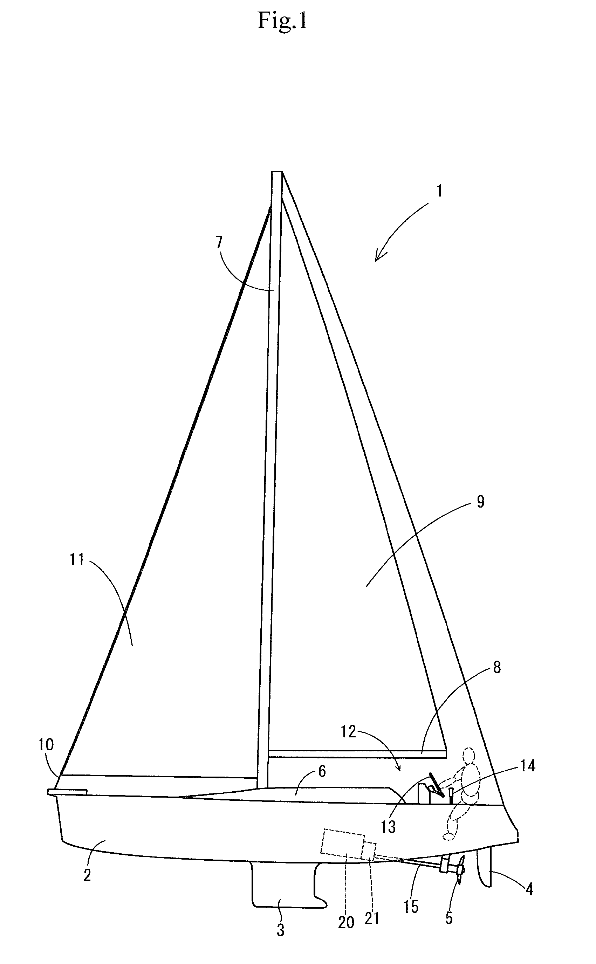

A description will be given below of embodiments obtained by embodying the present invention with reference to the accompanying drawings. As shown in Fig. 1, a yacht 1 corresponding to a marine vessel according to a first embodiment is provided with a ship body 2, a ballast keel 3 which is provided in a center side of a ship bottom in the ship body 2, a helm 4 which is provided in a back end side of the ship bottom in the ship body 2, and a propeller 5 which is arranged between the ballast keel 3 and the helm 4. A mast 7 is provided in a rising manner on an upper deck 6 which exists in an upper surface side of the ship body 2. A boom 8 is provided in a lower portion of the mast 7. A main sail 9 is provided in a tensioned manner between the mast 7 and the boom 8. A wire rope 10 is coupled to a bow side of the ship body 2 and an upper end side of the mast 7. A jib sail 11 is provided in a tensioned manner in the wire rope 10.

A control portion 12 is provided in a rear side of the mast 7. Within the control portion 12, there are provided a steering handle 13 which changes a traveling direction of the ship body 2 to the right and left on the basis of steering, and a forward and reverse travel lever 14 serving as a forward and reverse travel operation tool which switched the traveling direction of the ship body 2 to a forward travel and a reverse travel. A propeller shaft 15 rotating the propeller 5 is axially supported to a back end side of the ship bottom in the ship body 2. The propeller 5 is attached to a protruding end side of the propeller shaft 15.

An inner portion of the ship body 2 is provided with an engine 20 serving as a main engine which is a drive source of the propeller 5, and a marine gear device (a speed reducing and reversing device) 21 which transmits a rotary power of the engine 20 to the propeller 5 via the propeller shaft 15. The propeller 5 is rotated by the rotary power which is transmitted to the propeller shaft 15 from the engine 20 via the marine gear device 21.

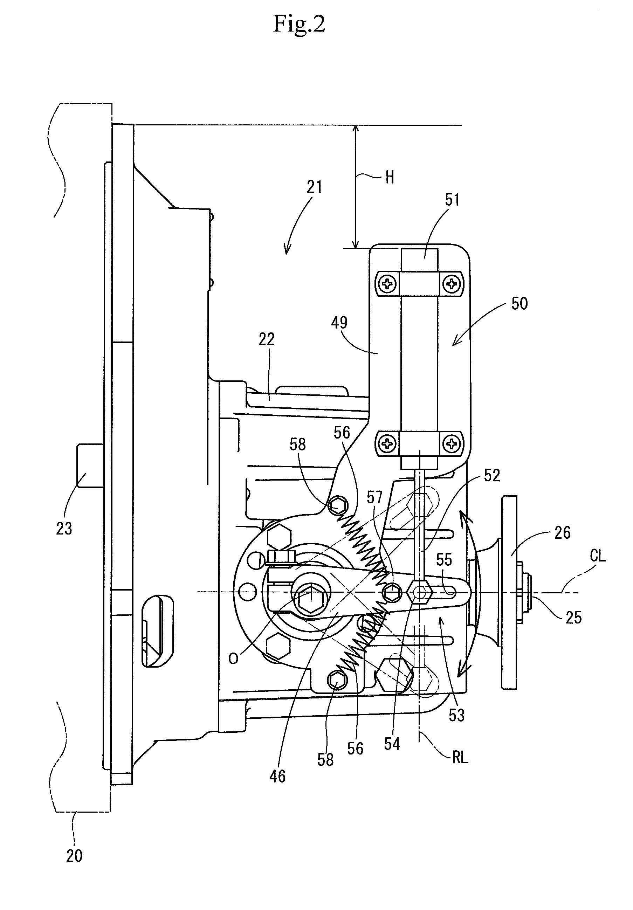

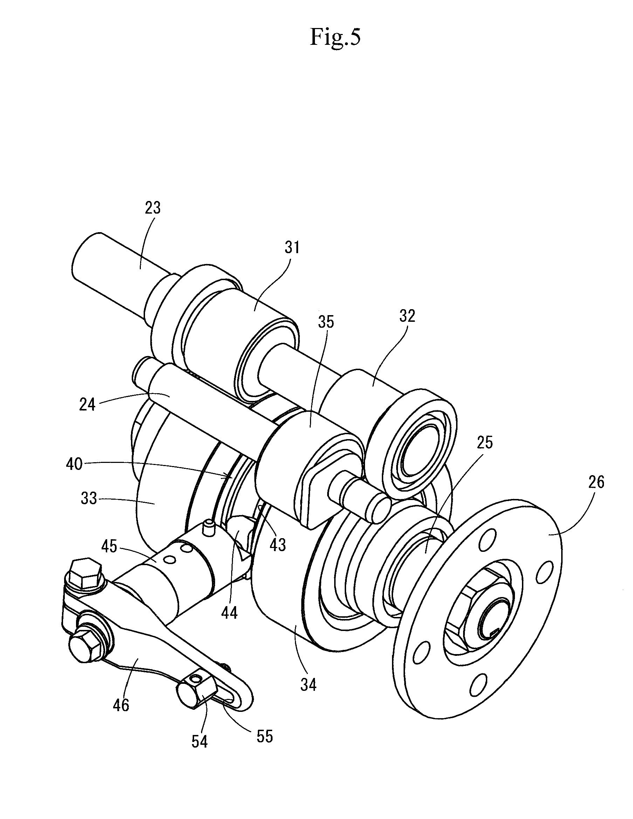

As shown in Figs. 2, 4 and 5, the marine gear device 21 is provided with a gear case 22 which is outside attached to a flywheel side (not shown) of the engine 20. The gear case 22 has an input shaft 23 protruding out toward the flywheel of the engine 20, and a forward and reverse travel switching clutch 40 serving as a forward and reverse travel switching mechanism for switching the rotary power of the input shaft 23 into a forward travel output, a neutral output or a reverse travel output, which are built-in.

Although details will be omitted, a flywheel is provided in a protruding end side of an output shaft (a crank shaft) of the engine 20. The input shaft 23 of the marine gear device 21 is connected to the flywheel via a damper joint. Therefore, the rotary power of the engine 20 is input to the input shaft 23 of the marine gear device 21 via the flywheel and the damper joint.

A relay shaft 24 and an output shaft 25 which extend in parallel to the input shaft 23 are axially supported rotatably within the gear case 22 in addition to the input shaft 23 mentioned above. The output shaft 25 protrudes in an opposite direction to the input shaft 23 from the gear case 22. A coupling 26 for connecting the propeller shaft 15 is attached to a protruding end side of the output shaft 25.

The input shaft 23 is integrally provided with a forward travel input gear 31 and a reverse travel input gear 32. Meanwhile, a forward travel gear 33 and a reverse travel gear 34 are axially supported to the output shaft 25 rotatably, the forward travel gear 33 corresponding to the forward travel input gear 31, and the reverse travel gear 34 corresponding to the reverse travel input gear 32. The forward travel input gear 31 constantly engages with the forward travel gear 33. Each of the reverse travel input gear 32 and the reverse travel gear 34 constantly engages with a relay gear 35 which is integrally provided in the relay shaft 24.

In other words, it is possible to transmit the power in a forward rotating direction (a forward travel direction) directly to the output shaft 25 from the input shaft 23 on the basis of the engagement between the forward travel input gear 31 and the forward travel gear 33. Meanwhile, it is possible to transmit the power in a reverse rotating direction (a reverse travel direction) to the output shaft 25 from the input shaft 23 via the relay shaft 24 on the basis of the engagement between the reverse travel input gear 32 and the reverse travel gear 34 via the relay gear 35.

A forward and reverse travel switching clutch 40 is provided between the forward travel gear 33 and the reverse travel gear 34 in the output shaft 25. A cone clutch (a conical clutch) which is an example of a dry type friction clutch is employed as the forward and reverse travel switching clutch 40 according to the first embodiment. The forward and reverse travel switching clutch 40 is spline fitted to the output shaft 25 so as to be relatively non-rotatable and be slidable in an axial direction. The forward travel gear 33 and the reverse travel gear 34 are selectively connected to the output shaft 25 on the basis of an operation of the forward and reverse travel switching clutch 40.

A pair of truncated conical portions 41 and 42 are formed in the forward and reverse travel switching clutch 40, the truncated conical portions 41 and 42 facing to the forward travel gear 33 or the reverse travel gear 34. Further, cone cup portions 37 and 38 are formed in a concave manner in the forward travel gear 33 and the reverse travel gear 34, the cone cup portions 37 and 38 which the corresponding truncated conical portions 41 and 42 are fitted to and friction engage with. When the forward travel side truncated conical portion 41 of the forward and reverse travel switching clutch 40 is fitted to the cone cup portion 37 of the forward travel gear 33, the forward travel gear 33 integrally rotates the forward and reverse travel switching clutch 40, and the output shaft 25 rotates in the forward rotating direction (the forward travel direction). When the reverse travel side truncated conical portion 42 of the forward and reverse travel switching clutch 40 is fitted to the cone cup portion 38 of the reverse travel gear 34, the reverse travel gear 34 integrally rotates the forward and reverse travel switching clutch 40, and the output shaft 25 rotates in the reverse rotating direction (the reverse travel direction).

An outward opening annular groove 43 is formed between both the truncated conical portions 41 and 42 in an outer peripheral surface of the forward and reverse travel switching clutch 40. A leading end side of a shifter 44 is engaged with the annular groove 43, the shifter 44 controlling in a sliding manner the forward and reverse travel switching clutch 40 on the output shaft 25. A base end side of the shifter 44 is attached to a switching shaft 45 which is axially supported to one side wall of the gear case 22 rotatably, in a state in which the base end side is eccentric from an axis of the switching shaft 45. The switching shaft 45 protrudes outward from the one side wall of the gear case 22. A switching lever 46 serving as an operating part is attached to a protruding end side of the switching shaft 45.

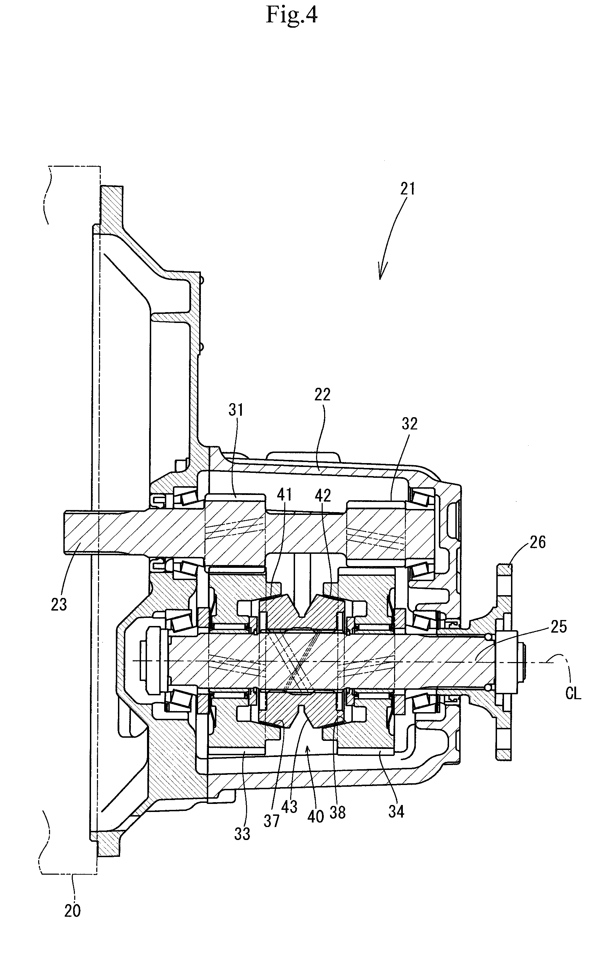

The forward and reverse travel switching clutch 40 is selectively slidable to a neutral position shown in Fig. 4, a forward travel position at which the forward travel side truncated conical portion 41 is fitted to the cone cup portion 37 of the forward travel gear 33, and a reverse travel position at which the reverse travel side truncated conical portion 42 is fitted to the cone cup portion 38 of the reverse travel gear 34, on the basis of the rotating motion of the switching lever 46 around the switching shaft 45. In other words, the switching lever 46 switches and actuates the forward and reverse travel switching clutch 40 to the forward travel state, the neutral state or the reverse travel state on the basis of the rotating motion.

When the forward and reverse travel switching clutch 40 is slid along the output shaft 25 on the basis of the rotating motion of the switching lever 46, the alternatively selected forward travel gear 33 or reverse travel gear 34 is connected to the output shaft 25. In the case that the forward travel gear 33 is selected, the rotary power in the forward rotating direction (the forward travel direction) is directly transmitted to the output shaft 25 from the input shaft 23, and the output shaft 25 and further the propeller 5 of the propeller shaft 15 rotates in the forward rotating direction (the forward travel direction). In the case that the reverse travel gear 34 is selected, the rotary power in the reverse rotating direction (the reverse travel direction) is transmitted to the output shaft 25 from the input shaft 23 via the relay shaft 24, and the output shaft 25 and further the propeller 5 of the propeller shaft 15 rotates in the reverse rotating direction (the reverse travel direction).

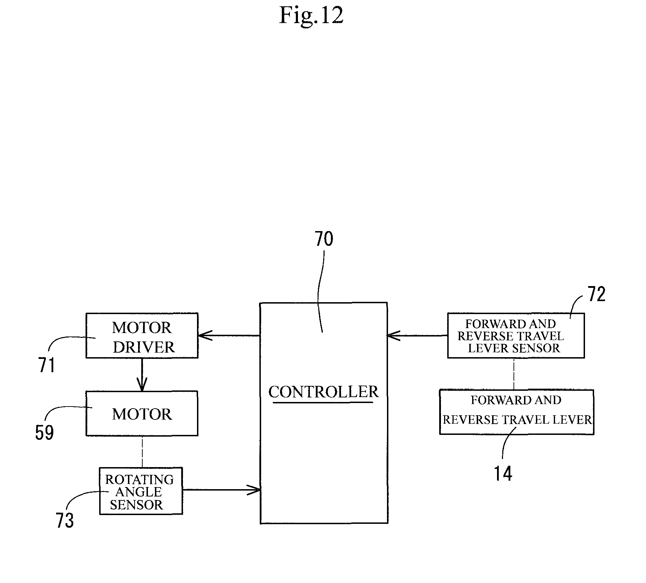

As shown in Fig. 2, an electric cylinder 50 serving as an electric (direct acting) actuator is arranged in an outer surface side of the one side wall of the gear case 22. In the first embodiment, an attaching bracket 49 is fastened by bolt to the outer surface side of the one side wall of the gear case 22. Further, a cylinder main body 51 of the electric cylinder 50 is fixed to the attaching bracket 49. The electric cylinder 50 according to the first embodiment is of a so-called ball screw type, and is provided with the cylinder main body 51 mentioned above, a rod 52 serving as a rod body which protrudes out of the cylinder main body 51 so as to be movable forward and backward, and a motor 59 (refer to Fig. 12) which moves the rod 52 forward and backward. The rod 52 moves forward and backward by forward and reverse rotating the motor 59 in correspondence to the control of the forward and reverse travel lever 14.

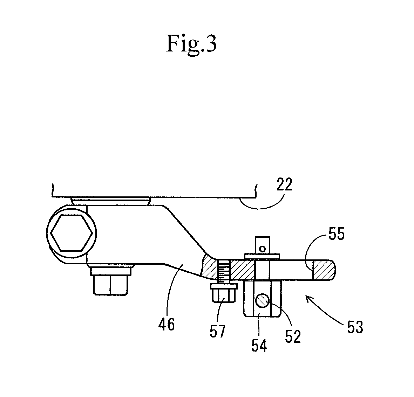

The electric cylinder 50 is connected in an interlocking manner to the switching lever 46 via a conversion mechanism 53 which converts the forward and backward movement of the rod 52 into a rotating motion of the switching lever 46. As shown in Figs. 2 and 3, in the first embodiment, a leading end side of the rod 52 of the electric cylinder 50 is connected to a leading end side of the switching lever 46 by a pivotally supporting pin 54. The pivotally supporting pin 54 is attached to the leading end side of the rod 52 in the electric cylinder 50. Further, the pivotally supporting pin 54 is fitted to a long-hole like loosely fitting hole 55 which is formed in the leading end side of the switching lever 46 so as to be prevented from coming off and be slidably movable. In other words, in the first embodiment, the conversion mechanism 53 is constructed by loosely fitting the pivotally supporting pin 54 provided in the rod 52 to the loosely fitting hole 55 provided in the switching lever 46.

When the rod 52 of the electric cylinder 50 moves forward and backward, the pivotally supporting pin 54 slidably moves the loosely fitting hole 55 in the switching lever 46 side. As a result, the forward and backward movement of the rod 52 is smoothly converted into the rotating motion of the switching lever 46 without generating any complication in the connection between the rod 52 of the electric cylinder 50 and the switching lever 46. Further, as shown in Fig. 2, as seen from a direction along the center O of rotation of the switching lever 46, a center line RL in the forward and backward moving direction of the rod 52 is biased so as not to intersect the center O of rotation of the switching lever 46. As a result, in the conversion mechanism 53, the rod 52 of the electric cylinder 50 and the switching lever 46 are connected in an interlocking manner while avoiding a dead center where the rotating force does not work. Therefore, it is possible to secure the smooth motion conversion.

As shown in Fig. 2, the switching lever 46 is provided with a pair of neutral springs 56 and 56 serving as the self-return member. The neutral springs 56 and 56 are structured such as to return the forward and reverse travel switching clutch 40 to the neutral state by forcibly rotating the switching lever 46 when any power is not supplied to the electric cylinder 50, and are arranged in both sides across the switching lever 46. One end side of each of the neutral springs 56 is attached to a locking bolt 57 which is fastened to a longitudinally midstream portion of the switching lever 46. The other end side of each of the neutral springs 56 is attached to a support bolt 58 which is fastened to the attaching bracket 49.

The neutral springs 56 and 56 pull at each other in opposite directions in a state in which they are respectively loaded between the locking bolt 57 of the switching lever 46 and the support bolt 58 of the attaching bracket 49. As a result, in the case that any power is not supplied to the electric cylinder 50, for example, when the electric cylinder 50 breaks down or the power supply is turned off, the switching lever 46 and further the forward and reverse travel switching clutch 40 are automatically returned to the neutral position (refer to Fig. 4) on the basis of elastic restoring force of the neutral springs 56 and 56. Therefore, the forward and reverse travel switching clutch 40 is not set to the forward travel state or the reverse travel state, for example, when the electric cylinder 50 breaks down or the power supply is turned off, and it is possible to do away with the risk that the yacht 1 unexpectedly actuates despite the ship operator's intensions after returning from the break-down. This is preferable for the fail-safe.

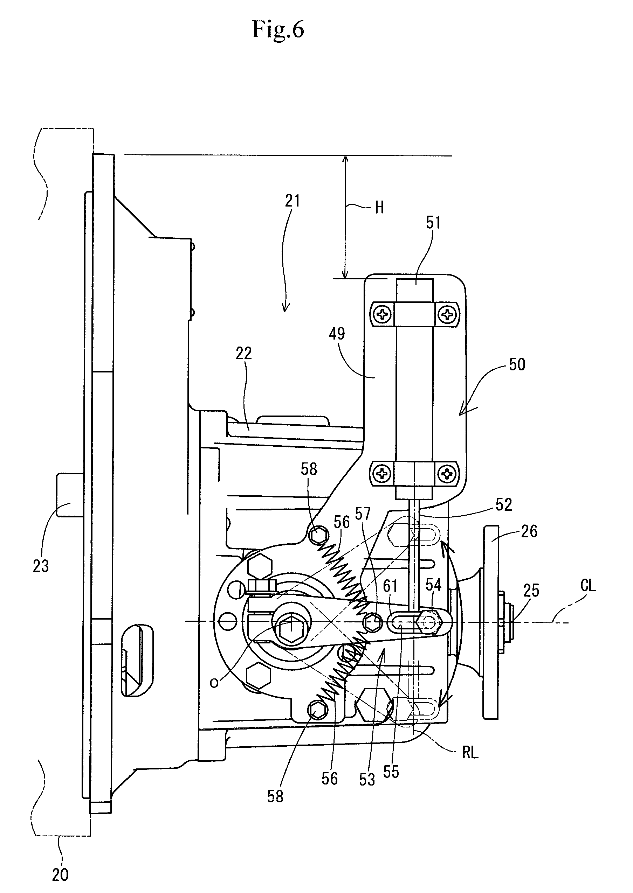

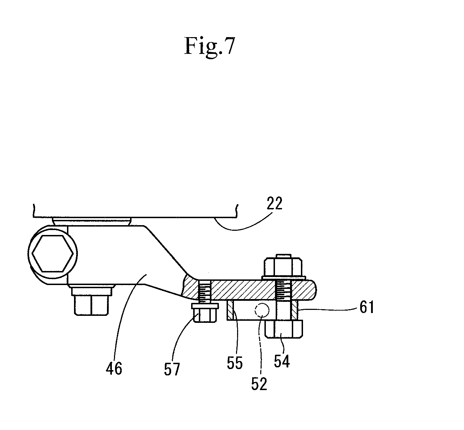

Figs. 6 to 11 show modified examples of the marine gear device 21 in the first embodiment. In the modified examples of the marine gear device 21 shown below, a detailed description of the elements having the same structures and operations as those of the first embodiment will be omitted and the element are attached with the same reference numerals as those of the first embodiment. Figs. 6 and 7 show a first modified example of the marine gear device 21. The first modified example is different from the first embodiment in a point that the conversion mechanism 53 is constructed by loosely fitting the pivotally supporting pin 54 provided in the switching lever 46 to the loosely fitting hole 55 provided in the leading end side of the rod 52, contrary to the first embodiment.

In this case, a guide block 61 is attached to the leading end side of the rod 52. The loosely fitting hole 55 is formed in the guide block 61, the loosely fitting hole 55 being long in a direction intersecting the longitudinal direction of the rod 52. The pivotally supporting pin 54 is attached to the leading end side of the switching lever 46. Further, the pivotally supporting pin 54 is fitted to the loosely fitting hole 55 of the guide block 61 so as to be prevented from coming off and be slidably movable. The other structures are approximately the same as those of the first embodiment.

In the structure of the first modified example, the pivotally supporting pin 54 in the switching lever 46 side slidably moves along the loosely fitting hole 55 in the rod 52 side when the rod 52 of the electric cylinder 50 moves forward and backward. As a result, the forward and backward movement of the rod 52 is smoothly converted into the rotating motion of the switching lever 46 without generating any complication in the connection between the rod 52 of the electric cylinder 50 and the switching lever 46. In other words, the same operations and effects as those of the first embodiment can be obtained in the structure of the first modified example.

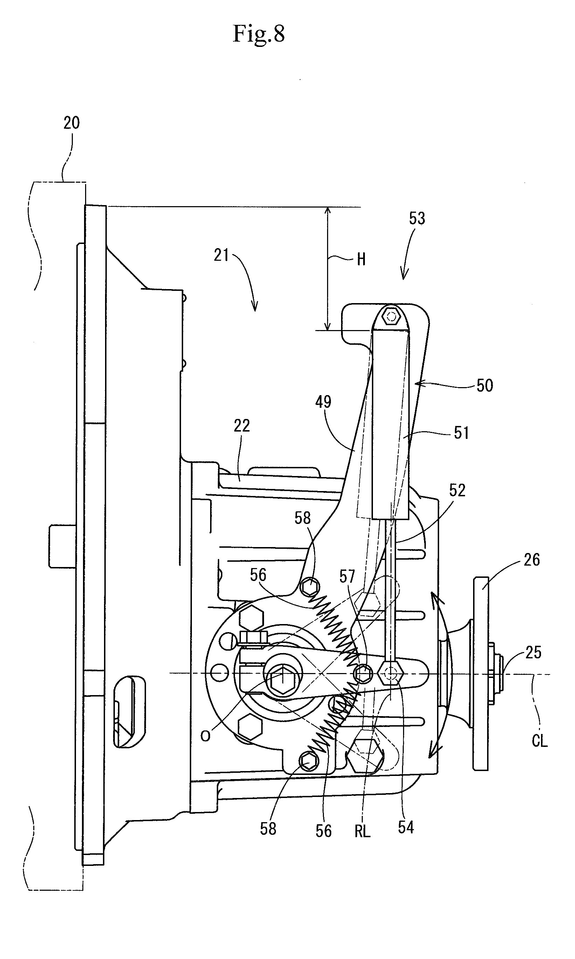

Fig. 8 shows a second modified example of the marine gear device 21. The second modified example is different from the first embodiment in a point that an arrangement and posture of the electric cylinder 50 can be changed in relation to the gear case 22 so as not to prevent the forward and backward movement of the rod 52. In this case, the cylinder main body 51 is suspended to the attaching bracket 49 which is fastened by bolts to an outer surface side of one side wall of the gear case 22, so as to be capable of relatively rotating around the upper end side of the cylinder main body 51 serving as a supporting point. The leading end side of the rod 52 is connected to the leading end side of the switching lever 46 by the pivotally supporting pin 54. The rod 52 and the switching lever 46 can bend and rotate each other around the pivotally supporting pin 54 serving as the supporting point. The other structures are approximately the same as those of the first embodiment.

According to the structure of the second modified example, the cylinder main body 51 rotates like a pendulum around the upper end side serving as the supporting point in conjunction with the bending and rotating motion of the rod 52 and the switching lever 46 on the basis of the forward and backward movement of the rod 52. As a result, the forward and backward movement of the rod 52 is smoothly converted into the rotating motion of the switching lever 46 without generating any complication in the connection between the rod 52 of the electric cylinder 50 and the switching lever 46. In other words, the same operations and effects as those of the first embodiment can be obtained in the structure of the second modified example.

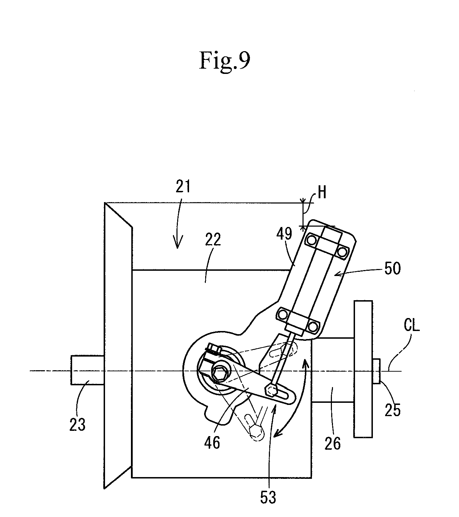

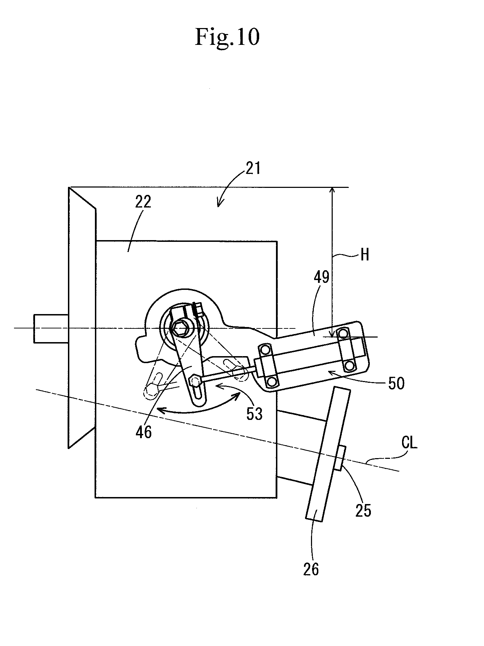

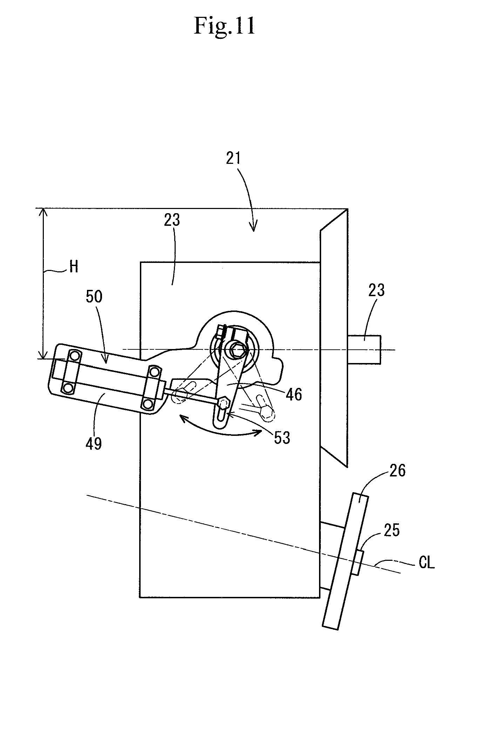

Figs. 9 to 11 show third to fifth modified examples of the marine gear device 21. The marine gear devices 21 according to the first embodiment and the first to second modified examples are structured such that the input shaft 23 and the output shaft 25 extend in parallel and are arranged in the offset manner. On the contrary, the marine gear device 21 according to the third modified example shown in Fig. 9 is structured such that the input shaft 23 and the output shaft 25 are coaxially positioned. The marine gear device 21 according to the fourth modified example shown in Fig. 10 is structured such that the output shaft 25 is arranged so as to be inclined to the input shaft 23. The marine gear device 21 according to the fifth modified example shown in Fig. 11 is the same as the fourth modified example in a point that the output shaft 25 is arranged so as to be inclined to the input shaft 23, however, the marine gear device 21 according to the fifth modified example is different from the fourth modified example in a point that the coupling 26 is positioned in the protruding end side of the input shaft 23 in the gear case 22. The connecting structure between the electric cylinder 50 and the switching lever 46 employs that of the first embodiment. As is apparent from the above description, the present invention can be applied to various types of marine gear devices 21.

As is apparent from the above description and Figs. 2, 6 and 8, the marine gear device 21 transmitting the rotary power of the main engine 20 mounted to the marine vessel 1 to the propeller 5 is provided with the input shaft 23 to which the rotary power of the main engine 20 is input, the forward and reverse travel switching mechanism 40 which switches the rotary power of the input shaft 23 to the forward travel output, the neutral output and the reverse travel output, the electric (the direct acting) actuator 50 having the rod body 52 which moves forward and backward in conjunction with the operation of the forward and reverse travel operation tool 14, and the operating part 46 which switches and actuates the forward and reverse travel switching mechanism 40 to the forward travel state, the neutral state or the reverse travel state on the basis of the rotating motion, and the electric (the direct acting) actuator 50 and the operating part 46 are connected via the conversion mechanism 53 which converts the forward and backward movement of the rod body 52 into the rotating motion of the operating part 46. Therefore, it is possible to electrically achieve the switch and actuation of the forward and reverse travel switching mechanism 40 without using any conventional long wire cable. It is possible to securely reduce the operation force which is required for the manual operation of the forward and reverse travel operation tool 14.

Further, the electric (the direct acting) actuator 50 and the operating part 46 are connected via the conversion mechanism 53 which converts the forward and backward movement of the rod body 52 into the rotating motion of the operating part 46 as mentioned above. Therefore, even in the existing marine gear device using the wire cable, it is possible to simply replace the wire cable with the electric (the direct acting) actuator 50 by the later attachment.

As is apparent from the above description and Figs. 2, 6 and 8, the center line RL in the forward and backward moving direction of the rod body 52 is biased so as to be prevented from intersecting with the center of rotation O of the operating part 46 as seen from the direction along the center of rotation O of the operating part 46. Therefore, the rod body 52 (the electric (the direct acting) actuator 50) is connected to the operating part 46 while avoiding the dead center where the rotating force does not work, in the conversion mechanism 53, and it is possible to secure the smooth motion conversion.

As is apparent from the above description and Figs. 2 and 6, the conversion mechanism 53 is constructed by loosely fitting, to the loosely fitting hole 55 which is formed in any one of the rod body 52 and the operating part 46, the pivotally supporting pin 54 which is provided in the other. Therefore, it is possible to smoothly convert the forward and backward movement of the rod body 52 into the rotating motion of the operating part 46 without generating any complication in the connection between the rod body 52 and the operating part 46. It is possible to achieve the smooth motion conversion and further the secure switch and actuation of the forward and reverse travel switching mechanism 40, in spite of the simple structure constructed by the combination of the loosely fitting hole 55 and the pivotally supporting pin 54.

As is apparent from the above description and Fig. 8, the electric (the direct acting) actuator 50 is supported to the gear case 22 which accommodates the forward and reverse travel switching mechanism 40, and the arrangement and posture of the electric (the direct acting) actuator 50 can be changed in relation to the gear case 22 so as not to prevent the forward and backward movement of the rod body 52. Therefore, it is possible to achieve the smooth motion conversion and further the secure switch and actuation of the forward and reverse travel switching mechanism 40 in spite of the simple structure, even in this case.

Fig. 12 shows a function block diagram of a controller 70 which is mounted to the yacht 1 according to the first embodiment. The controller 70 mainly controls the generation actuation of the engine 20 and the marine gear device 21. To the controller 70, there are connected a motor driver 71 which drives the motor 59 of the electric cylinder 50, a forward and reverse travel lever sensor 72 which detects a control position of the forward and reverse travel lever 14, and a rotating angle sensor 73 serving as an actuation detecting member which is provided in the motor 59. The rotating angle sensor 73 detects a protruding amount of the rod 52 of the electric cylinder 50 on the basis of the rotating angle of the motor shaft in the motor 59.

The controller 70 is structured such as to detect the protruding amount of the rod 52 of the electric cylinder 50 (comprehend the rotating angle (the rotating position) of the switching lever 46) on the basis of the detection information of the rotating angle sensor 73, and discriminate whether the forward and reverse travel switching clutch 40 is in the forward travel state, the neutral state or the reverse travel state. With the structure mentioned above, it is possible to accurately comprehend the actuation state of the electric cylinder 50 and further the state of the forward and reverse travel switching clutch 40 on the basis of the detection information of the rotating angle sensor 73. Therefore, it is possible to secure the reliability of the electric cylinder 50 in relation to the drive control.

It goes without saying that the structure of the function block diagram of the first embodiment can be applied to the first to fifth modified examples mentioned above. Further, the actuation detecting member is not limited to the rotating angle sensor 73, but may employ the forward and reverse travel lever sensor 72 mentioned above, or may employ a rod sensor which directly detects the protruding amount of the rod 52 of the electric cylinder 50. It is possible to employ a lever rotating angle sensor which detects the rotating angle (the rotating position) of the switching lever 46 or the switching shaft 45.

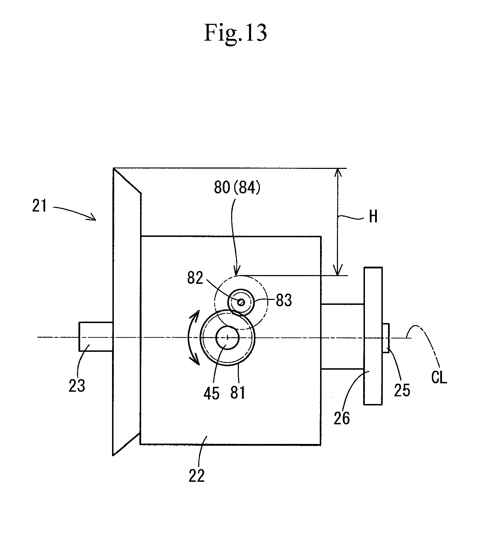

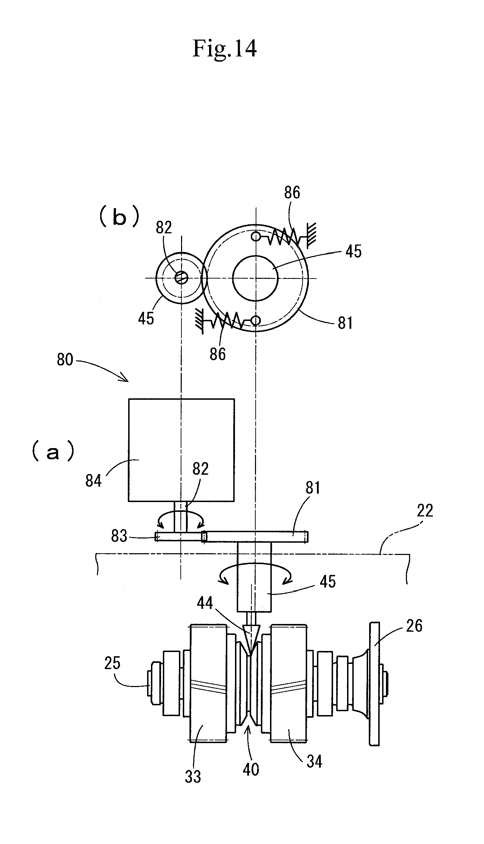

Figs. 13 and 14 show a marine gear device 21 according to a second embodiment. Here, in the marine gear device 21 according to the second embodiment shown below, a detailed description of the elements having the same structures and operations as those of the first embodiment will be omitted and the elements are attached with the same reference numerals. The second embodiment is different from the first embodiment in a point that an electric switching motor 80 is employed as the electric actuator in place of the electric cylinder 50 according to the first embodiment.

In this case, the switching shaft 45 protrudes outward from one side wall of the gear case 22. A switching shaft spur gear 81 is fixed to the protruding end side of the switching shaft 45 in place of the switching lever 46 serving as the operating part. Meanwhile, a motor main body 84 of the electric switching motor 80 serving as the electric actuator is supported to an outer surface side of the one side wall of the gear case 22. A pinion spur gear 83 is constantly engaged with the switching shaft spur gear 81, the pinion spur gear 83 being firmly fixed to a switching motor shaft 82 which protrudes out of the motor main body 84.

The second embodiment is structured such as to forward and reverse rotate the pinion spur gear 83 of the electric switching motor 80 in correspondence to the operation of the forward and reverse travel lever 14. The switching shaft 45 and further the shifter 44 rotate on the basis of the rotation of the pinion spur gear 83 by the electric switching motor 80. As a result, the forward and reverse travel switching clutch 40 is selectively slid to a neutral position, a forward travel position which connects the forward travel gear 33 to the output shaft 25, and a reverse travel position which connects the reverse travel gear 34 to the output shaft 25. In the second embodiment, the switching shaft 45 (or the switching shaft spur gear 81) corresponds to the operating part.

Even in the case structured as mentioned above, it is possible to electrically achieve the switch and actuation of the forward and reverse travel switching clutch 40 without using the conventional long wire cable. It is possible to securely reduce the operation force which is required for the manual operation of the forward and reverse travel lever 14.

As shown in Fig. 14(b), the switching shaft spur gear 81 is provided with a pair of neutral springs 86 and 86 which serve as the self-return member. The neutral springs 86 and 86 return the forward and revere travel switching clutch 40 to the neutral state by forcibly rotating the switching shaft 45 when any power is not supplied to the electric switching motor 80, and are arranged in both side across an axis of the switching shaft spur gear 81 (the switching shaft 45). One end side of each of the neutral springs 86 is fixed to an upper surface side of the switching shaft spur gear 81 so as to be arranged at 180 degrees phase positions each other. The other end side of each of the neutral springs 86 is fixed to the outer surface side of the one side wall of the gear case 22.

As shown in Fig. 14(b), the pair of neutral springs 86 and 86 is set to a pulling relationship at each other in opposite directions. As a result, in the case that any power is not supplied to the electric switching motor 80, for example, when the electric switching motor 80 breaks down or the power supply is turned off, the switching shaft spur gear 81 (the switching shaft 45) and further the forward and reverse travel switching clutch 40 are automatically returned to the neutral position on the basis of elastic restoring force of both the neutral springs 86 and 86. Therefore, even in the case of the second embodiment, the forward and reverse travel switching clutch 40 is not set to the forward travel state or the reverse travel state, for example, when the electric switching motor 80 breaks down or the power supply is turned off, and it is possible to do away with the risk that the yacht 1 unexpectedly actuates despite the ship operator's intensions after returning from the break-down. This is preferable for the fail-safe.

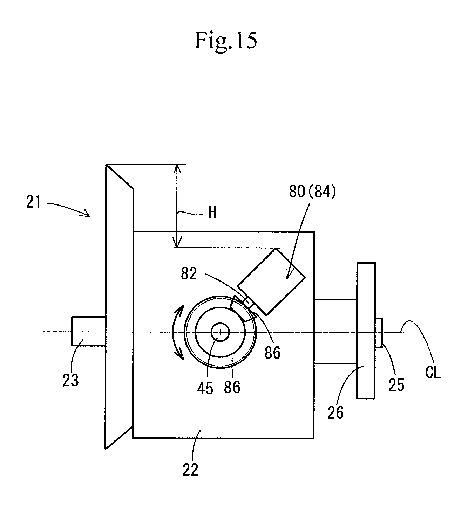

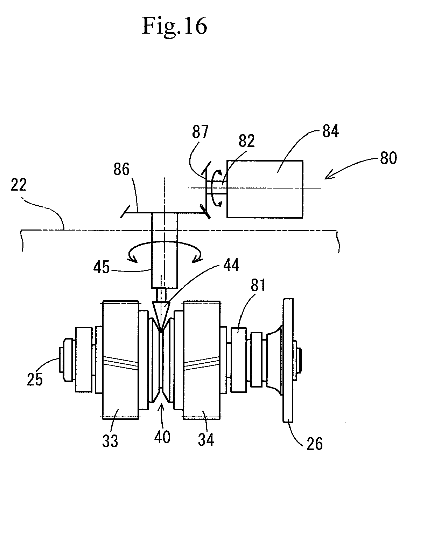

Figs. 15 and 16 show a first modified example of the marine gear device 21 according to the second embodiment. The first modified example is different from the second embodiment in a point that an engagement between a switching shaft bevel gear 87 and a pinion bevel gear 88 is employed in place of the engagement between the switching shaft spur gear 81 and the pinion spur gear 83. As a result, the switching motor shaft 82 of the electric switching motor 80 extends in a direction intersecting the switching shaft 45.

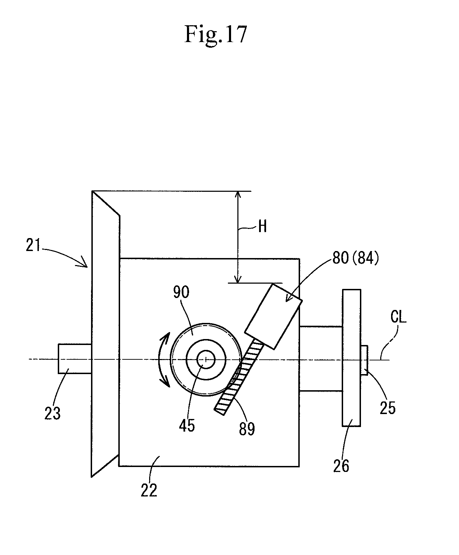

Fig. 17 shows a second modified example of the marine gear device 21 according to the second embodiment. The second modified example is different from the second embodiment in a point that a worm gear is employed in place of the engagement between the switching shaft spur gear 81 and the pinion spur gear 83. In other words, the switching motor shaft of the electric switching motor 80 is constructed by a worm 89, and the worm 89 is engaged with a worm wheel 90 which is firmly fixed to the protruding end side of the switching shaft 45.

In any case of employing the first modified example or the second modified example, it is possible to electrically achieve the switch and actuation of the forward and reverse travel switching clutch 40 without using the conventional long wire cable, in the same manner as the second embodiment. Therefore, it is possible to securely reduce the operation force which is required for the manual operation of the forward and reverse travel lever 14. It goes without saying that the structures of the function block diagram according to the first embodiment can be applied even in the second embodiment and the first and second modified examples. In this case, the motor driver 71 drives the electric switching motor 80, and the rotating angle sensor 73 detects the rotating angle of the switching motor shaft 82. The controller 70 comprehends the rotating angle (the rotating position) of the switching shaft 45 on the basis of the detection information of the rotating angle sensor 73, and discriminates whether the forward and reverse travel switching clutch 40 is in the forward travel state, the neutral state or the reverse travel state.

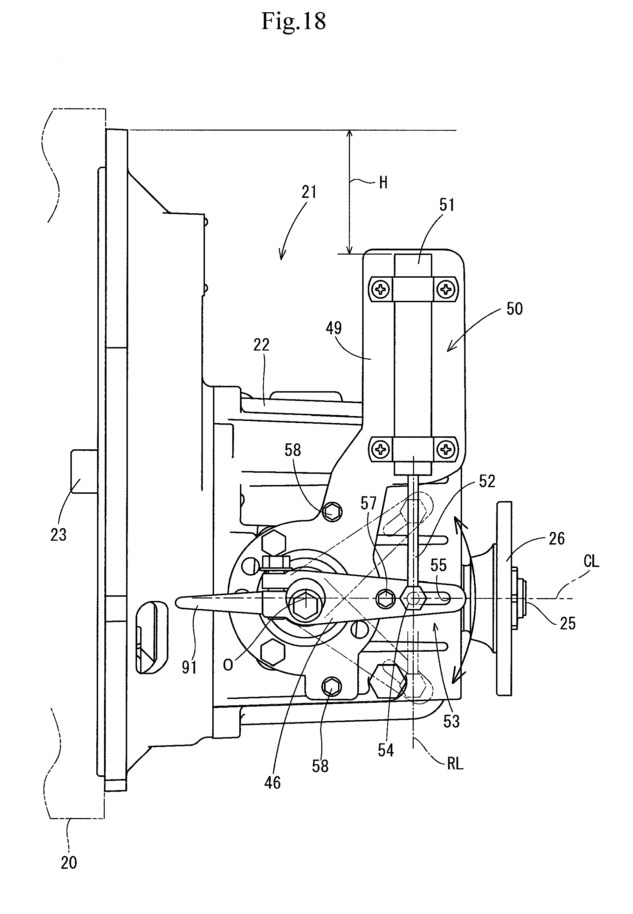

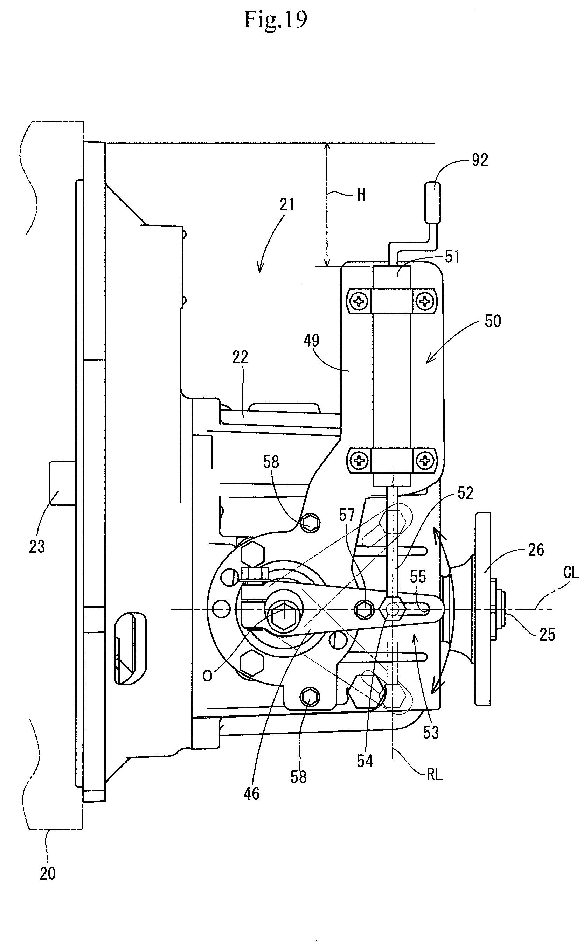

Fig. 18 shows a sixth modified example of the marine gear device 21 according to the first embodiment, and Fig. 19 shows a seventh modified example of the marine gear device 21 according to the first embodiment. In the sixth modified example, the switching lever 46 is provided with an emergency manual operation tool 91 for manually operating the switching lever 46 independently from the electric cylinder 50. The switching shaft 45 and further the shifter 44 rotate by manually rotating the emergency manual operation tool 91 around the axis of the switching shaft 45. As a result, the forward and reverse travel switching clutch 40 is selectively slid to the neutral position, the forward travel position at which the forward travel gear 33 is connected to the output shaft 25, and the reverse travel position at which the reverse travel gear 34 is connected to the output shaft 25.

In the seventh modified example, the electric cylinder 50 is provided with an emergency manual operation tool 92 for manually operating the switching lever 46 independently from the electric cylinder 50. In this case, the emergency manual operation tool 92 is provided in the upper end side of the cylinder main body 51. Although details are not shown, a base end side of the emergency manual operation tool 92 is connected to the rod 52 within the cylinder main body 51. The rod 52 moves forward and backward and the switching shaft 45 and further the shiftr 44 rotate by manually rotating the emergency manual operation tool 92. As a result, the forward and reverse travel switching clutch 40 is selectively slid to the neutral position, the forward travel position and the reverse travel position.

The emergency manual operation tools 91 and 92 according to the sixth and seventh embodiments are not normally operated, but are operated in the case that an electric system trouble, for example, an abnormality in the electric cylinder 50 is generated, for an emergency avoiding purpose. Even in the case that the electric system trouble is generated, it is possible to execute a limp home operation (a degeneracy operation) traveling forward and reverse the yacht 1 in a state in which the electric cylinder 50 is not effective, by manually operating each of the emergency manual operation tool 91 or 92. Therefore, options for dealing with the emergency circumstances are increased, and this is further preferable in the light of the fail-safe.

As is apparent from the above description and Figs. 2 and 14, the marine gear device 21 transmitting the rotary power of the main engine 20 mounted to the marine vessel 1 to the propeller 5 is provided with the input shaft 23 to which the rotary power of the main engine 20 is input, the forward and reverse travel switching mechanism 40 which switches the rotary power of the input shaft 23 to the forward travel output, the neutral output or the reverse travel output, the operating part 46 (45) which switches and actuates the forward and reverse travel switching mechanism 40 to the forward travel state, the neutral state or the reverse travel state on the basis of the rotary motion, and the electric actuator 50 (80) which rotates the operating part 46 (45) in correspondence to the operation of the forward and reverse travel operation tool 14, and the operating part 46 (45) is provided with the self-return member 56 (86) which forcibly rotates the operating part 46 (45) when any electric power is not supplied to the electric actuator 50 (80), and returns the forward and reverse travel switching mechanism 40 to the neutral state. Thus, when the electric actuator 50 (80) breaks down or the power supply is turned off, the forward and reverse travel switching mechanism 40 is not set to the forward travel or the reverse travel state. Therefore, it is possible to do away with the risk that the marine vessel 1 actuates unexpectedly despite the ship operator's intention after restoring from the breakdown. It is preferable for the fail-safe.

As is apparent from the above description and Fig. 12, the marine gear device is provided with the actuation detecting member 73 which detects the actuation state of the electric actuator 50 or 80, and the controller 70 which drives the electric actuator 50 (80) in response to the operation of the forward and reverse travel operation tool 14, and the controller 70 discriminates on the basis of the detection information of the actuation detecting member 73 whether the forward and reverse travel switching mechanism 40 is in the forward travel state, the neutral state or the reverse travel state. Therefore, it is possible to accurately comprehend the actuation state of the electric actuator 50 (80) and further the state of the forward and reverse travel switching mechanism 40 on the basis of the detection information of the actuation detecting member 73. It is possible to secure reliability in relation to the drive control of the electric actuator 50 (80).

As is apparent from the above description and Figs. 18 and 19, the operating part 46 or the electric actuator 50 is provided with the emergency manual operation tool 91 or 92 for manually operating the operating part 46 independently from the electric actuator 50. Therefore, even in the case that any electric system trouble, for example, the abnormality in the electric actuator 50 is generated, it is possible to execute a limp home operation (a degeneracy operation) traveling forward and reverse the marine vessel 1 in a state in which the electric actuator 50 is not effective, by manually operating the emergency manual operation tool 91 or 92. Accordingly, options for dealing with the emergency circumstances are increased, and it is further preferable in the light of the fail-safe.

In the marine gear devices 21 according to the first embodiment and the modified examples thereof shown in Figs. 2, 6, 8, 9 to 11, 18 and 19, and the marine gear devices 21 according to the second embodiment and the modified examples shown in Figs. 13, 15 and 17, the electric cylinder 50 or the electric switching motor 80 serving as the electric actuator is supported by the gear case 22 itself. Further, the cylinder main body 51 of the electric cylinder 50 and the motor main body 84 of the electric switching motor 80 are positioned above the axis CL of the output shaft 25. Further, in all the examples, the upper ends of the cylinder main body 51 and the motor main body 84 are set to the positions which are lower than the highest end of the gear case 22 by height H. The electric cylinder 50 and the electric switching motor 80 are not limited to be supported to the gear case 22 itself (be arranged in the gear case 22 itself) and may be arranged in the vicinity of the gear case 22 within the ship body 2.

When these structures are employed, the electric cylinder 50 and the electric switching motor 80 are positioned at the gear case 22 itself or the comparatively high place in the vicinity of the gear case 22. Therefore, it is possible to reduce the risk that the electric cylinder 50 and the electric switching motor 80 break down due to the water immersion. Further, The maintenance work of the electric cylinder 50 and the electric switching motor 80 such as the inspection and the repair and replacement can be easily carried out, and it is possible to reduce the load of the maintenance work. Further, since the upper ends of the cylinder main body 51 and the motor main body 84 are set to the height positions which are lower than the highest end of the gear case 22 by the height H, it is possible to arrange the electric cylinder 50 and the electric switching motor 80 without increasing the vertical height of the gear case 22 while securing the maintenance workability of the electric cylinder 50 and the electric switching motor 80. Therefore, it is possible to reduce the vertical height of the marine gear device 22.

The structure of each of the portions in the present invention is not limited to the illustrated embodiments, but can be variously changed within a range which does not deflect from the scope of the present invention.

### Reference Signs List

- 1: Yacht (marine vessel)
- 5: Propeller
- 12: Control portion
- 13: Steering handle
- 14: Forward and reverse travel lever (forward and reverse travel operation tool)
- 15: Propeller shaft
- 20: Engine (main engine)
- 21: Marine gear device
- 22: Gear case
- 23: Input shaft
- 25: Output shaft
- 40: Forward and reverse travel switching clutch
- 44: Shifter
- 45: Switching shaft (operating part)
- 46: Switching lever (operating part)
- 49: Attaching bracket
- 50: Electric cylinder (electric (direct acting) actuator)
- 52: Rod
- 56, 86: Neutral spring
- 70: Controller
- 72: Forward and reverse travel lever sensor (actuation detecting member)
- 73: Rotating angle sensor (actuation detecting member)
- 80: Electric switching motor (electric actuator)
- 91, 92: Emergency manual operation tool

## Claims

1. A marine gear device transmitting a rotary power of a main engine mounted to a marine vessel to a propeller, comprising:
an input shaft to which the rotary power of the main engine is input;
a forward and reverse travel switching mechanism which switches the rotary power of the input shaft to a forward travel output, a neutral output or a reverse travel output;
an operating part which actuates the forward and reverse travel switching mechanism to a forward travel state, a neutral state or a reverse travel state on the basis of a rotary motion; and
an electric actuator which rotates the operating part in correspondence to an operation of a forward and reverse travel operation tool,
wherein the operating part is provided with a self-return member which forcibly rotates the operating part when any electric power is not supplied to the electric actuator, and returns the forward and reverse travel switching mechanism to the neutral state.

2. The marine gear device according to claim 1, further comprising:
an actuation detecting member which detects an actuation state of the electric actuator; and
a controller which drives the electric actuator in response to the operation of the forward and reverse travel operation tool,
wherein the controller discriminates on the basis of a detection information of the actuation detecting member whether the forward and reverse travel switching mechanism is in the forward travel state, the neutral state or the reverse travel state.

3. The marine gear device according to claim 1 or 2, wherein the operating part or the electric actuator is provided with an emergency manual operation tool for manually operating the operating part independently from the electric actuator.

4. The marine gear device according to claim 1, wherein the electric actuator is an electric direct acting actuator having a rod body which moves forward and backward in connection with the operation of the forward and reverse travel operation tool, and
the electric direct acting actuator and the operating part are connected via a conversion mechanism which converts a forward and backward motion of the rod body into a rotating motion of the operating part.

5. The marine gear device according to claim 4, wherein a center line in a forward and backward moving direction of the rod body is biased so as not to intersect a center of rotation of the operating part as seen from a direction along the center of rotation of the operating part.

6. The marine gear device according to claim 4 or 5, wherein the conversion mechanism is constructed by loosely fitting to a loosely fitting hole which is formed in any one of the rod body and the operating part, a pivotally supporting pin which is provided in the other.

7. The marine gear device according to claim 4 or 5, wherein the electric direct acting actuator is supported to a gear case which accommodates the forward and reverse travel switching mechanism, and an arrangement and posture of the electric direct acting actuator in relation to the gear case is changeable so as not to prevent the forward and backward movement of the rod body.

8. The marine gear device according to claim 1, further comprising an output shaft which transmits an output of the forward and reverse travel switching mechanism to the propeller,
wherein the electric actuator is arranged in a gear case itself which accommodates the input shaft, the output shaft and the forward and reverse travel switching mechanism or in the vicinity thereof, and a main body of the electric actuator is positioned above an axial line of the output shaft.

9. The marine gear device according to claim 8, wherein an upper end of the main body of the electric actuator is set to a height position which is lower than the highest end of the gear case.
